# EUROPÄISCHE PATENTSCHRIFT

(11) **EP 1 526 015 B1**
(45) Veröffentlichungstag und Bekanntmachung des Hinweises auf die Patenterteilung: **10.01.2007**
(21) Anmeldenummer: 03292624.8
(22) Anmeldetag: 21.10.2003
(51) Int. Cl.: B60H 1/00

(54) **Klappe, insbesondere für den Fussraum für ein Kraftfahrzeug-Belüftungssystem**
Flap, in particular for the distribution of ventilating air in the lower part of a passenger compartment
Trappe, en particulier pour la distribution d'air dans la partie inférieure d'un compartiment de passagers

(43) Veröffentlichungstag der Anmeldung: 27.04.2005
(73) Patentinhaber: Behr France Rouffach SAS, 68250 Rouffach (FR)
(72) Erfinder: Klein, Henri, 68000 Colmar (FR)
(74) Vertreter: Grauel, Andreas

(56) Entgegenhaltungen:
- EP-A- 1 319 537
- DE-A- 19 817 896
- FR-A- 2 879 510
- JP-A- 2002 019 447
- US-A- 3 661 069
- US-B1- 6 296 563
- PATENT ABSTRACTS OF JAPAN vol. 008, no. 240 (M-336), 6. November 1984 (1984-11-06) -& JP 59 120513 A (NISSAN JIDOSHA KK), 12. Juli 1984 (1984-07-12)

## Beschreibung

Die Erfindung betrifft eine Klappe-anordung, insbesondere für den Fußraum für ein Kraftfahrzeug-Belüftungssystem, gemäß dem Oberbegriff des Anspruchs 1.

Die Dokumente US 6 296 563 und EP 1 319 537 offenbaren dem Oberbegriff des Anspruchs 1.

Herkömmlicher Weise werden Flügel-Klappen zur Steuerung von Luftströmen bei Belüftungssystemen für den Fahrzeuginnenraum verwendet. Diese lassen, insbesondere auf Grund des erforderlichen Bauraums, Wünsche offen.

Es ist Aufgabe der Erfindung, eine verbesserte-Klappe, insbesondere für den Fußraum für ein Kraftfahrzeug-Belüftungssystem, zur Verfügung zu stellen.

Diese Aufgabe wird gelöst durch eine Klappe mit den Merkmalen des Anspruchs 1. Vorteilhafte Ausgestaltungen sind Gegenstand der Unteransprüche.

Erfindungsgemäß ist eine Klappe für den Fußraum in einem Kraftfahrzeug-Belüftungssystem vorgesehen, wobei die Klappe um eine Schwenkachse verschwenkbar ist, und die Klappe einen ersten Bereich aufweist, der sich in radialer Richtung auf einer Seite der Schwenkachse in Längsrichtung derselben erstreckt, und einen zweiten Bereich aufweist, der in einem Winkel hierzu, vorzugsweise senkrecht, angeordnet ist. Hierbei wirkt der zweite Bereich mit seiner von der Schwenkachse beabstandeten Kante mit einem Anschlag, der am Gehäuse vorgesehen ist, zusammen, um die Klappe gegenüber dem Gehäuse im geschlossenen Zustand abzudichten.

Die beiden Bereiche dienen bevorzugt zum Verschließen und Freigeben zweier Luftkanäle, insbesondere dem Luftkanal für den Front-Fußbereich und dem Luftkanal für den Fußbereich im Fond.

Der erste Bereich weist vorzugsweise eine rechteckige oder annähernd rechteckige Form auf, wobei dieser Bereich sich in einer Ebene senkrecht zur Schwenkachse erstreckt.

Der zweite Bereich weist vorzugsweise eine kreisausschnittsartige Form auf, wobei dieser Bereich einen Winkel von zwischen 15° und 90°, insbesondere 45°, aufweist. Dabei liegt insbesondere der Mittelpunkt des Kreisausschnitts nicht in der Schwenkachse. Die beiden in radialer Richtung bezüglich der Schwenkachse verlaufenden Kanten des Bereichs haben somit eine unterschiedliche Länge, wobei die in Schließrichtung der Klappe voreilende Kante kürzer als die nacheilende Kante ist:

Alternativ kann, wenn die beiden Bereiche nicht senkrecht zueinander angeordnet sind, eine Zylinderform abgedichtet werden.

Die Klappe weist vorzugsweise zwei über eine starre Achse miteinander verbundene spiegelsymmetrisch zueinander ausgebildete Teile auf. Dabei sind die beiden ersten Bereiche bevorzugt näher aneinander angeordnet als die zweiten Bereiche.

Die Klappe wird bevorzugt für die Regelung der Luftzufuhr zu den einzelnen Fußbereichen verwendet, jedoch kann sie auch für andere Bereiche verwendet werden, bei denen mehrere Luftkanäle gleichzeitig mit einer Klappe geöffnet oder verschlossen werden sollen.

Im Folgenden wird die Erfindung anhand zweier Ausführungsbeispiele unter Bezugnahme auf die Zeichnung im Einzelnen erläutert. In der Zeichnung zeigen:

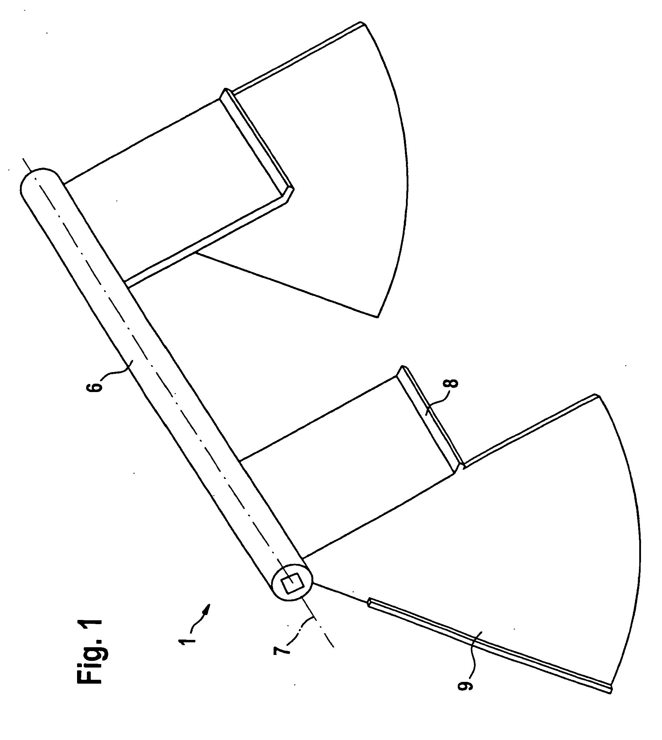

- Fig. 1: eine Ansicht einer erfindungsgemäßen Klappe gemäß dem ersten Ausführungsbeispiel,

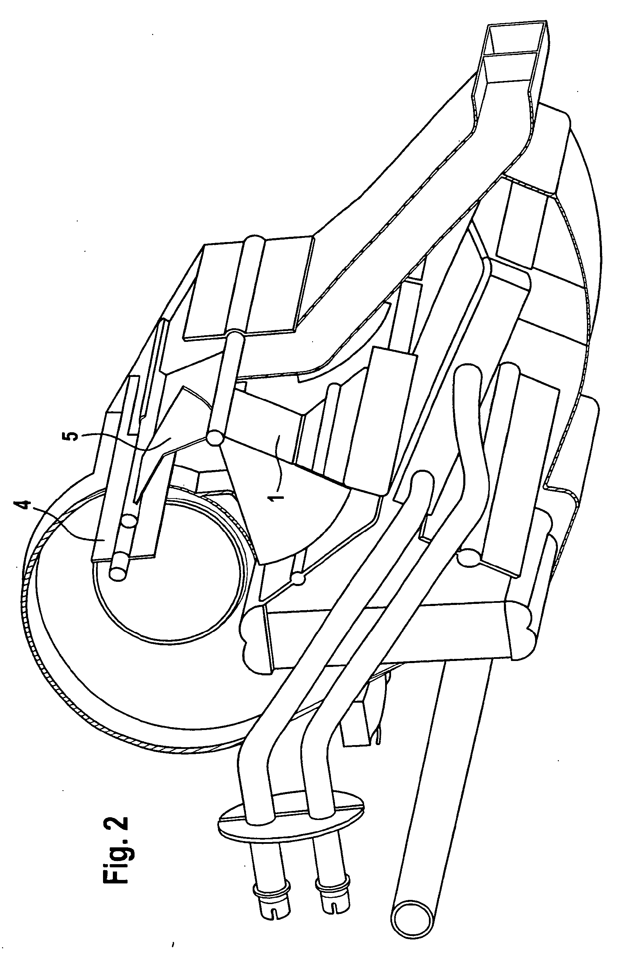

- Fig. 2: eine perspektivische Ansicht eines Belüftungssystems mit der Klappe von Fig. 1,

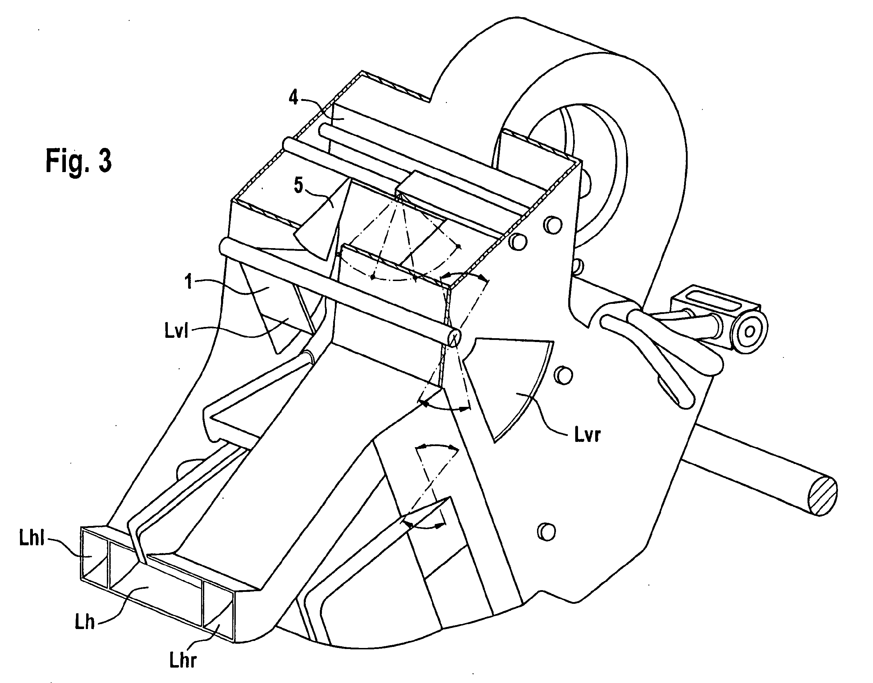

- Fig. 3: eine Ansicht des Belüftungssystems von Fig. 2 aus einer anderen Perspektive, und

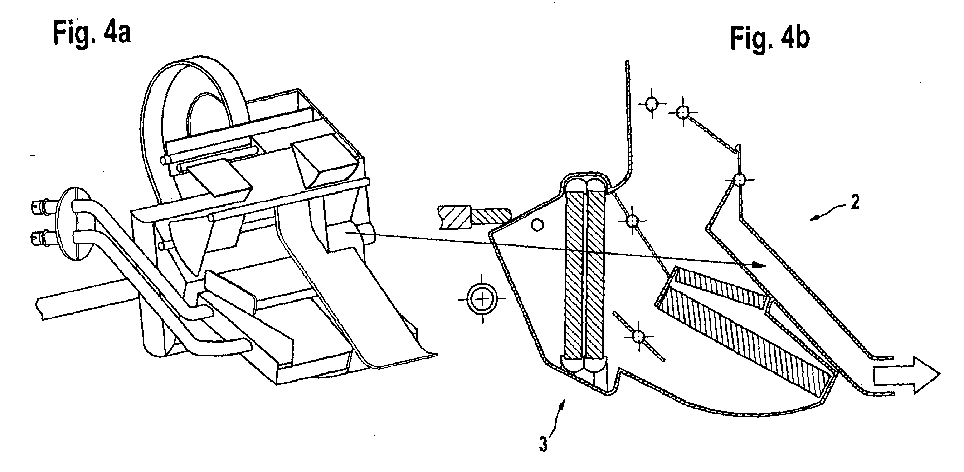

- Fig.4a: eine perspektivische Ansicht einer Klimaanlage mit Belüftungssystem mit der Klappe von Fig. 1,
- Fig. 4b: einen Schnitt durch die Klimaanlage von Fig. 4a zur Verdeutlichung der Klappenposition,
- Fig. 5a: eine Fig. 1 entsprechende Ansicht der Klappe,
- Fig. 5b: eine Seitenansicht auf die Klappe von Fig. 5a,
- Fig. 5c: einen Schnitt entlang der Linie A-A von Fig. 5a, und
- Fig. 6a: eine perspektivische Ansicht einer Klappe mit Klappenabdichtung gemäß dem zweiten Ausführungsbeispiel,
- Fig. 6b: eine Seitenansicht der Klappe von Fig. 6a in Richtung des Pfeiles B in Fig. 6a,
- Fig. 6c: eine Ansicht der Klappe von Fig. 6a in Richtung des Pfeiles A in Fig. 6a, und
- Fig. 7: eine tabellarische Darstellung verschiedener Ansichten von zwei Klappen gemäß den Ausführungsbeispielen.

Eine Klappe 1 ist Teil eines Kraftfahrzeug-Belüftungssystems 2, welches von einer Klimaanlage 3 kommende temperierte Luft dem Fahrzeuginnenraum zuführt. Das Belüftungssystem 2 umfasst weitere Klappen, wie eine Defrost-Klappe 4 für die Windschutzscheibe oder eine Innenraum-Klappe 5, welche die Luftzufuhr zu den Düsen im Armaturenbrett regelt.

Die Klappe 1 regelt die Luftzufuhr zu den Fußräumen im Front- und Fond-Bereich, wobei für beide Seiten des Kraftfahrzeugs jeweils entsprechende Luftkanäle vorgesehen sind. Hierbei ist der Luftkanal zum rechten Front-Bereich mit Lrv, der Luftkanal zum linken Front-Bereich Llv, der Luftkanal zum rechten Fond-Bereich Lrh und der Luftkanal zum linken Fond-Bereich mit Llh bezeichnet. Der Luftkanal der Fond-Belüftung ist mit Lh bezeichnet.

Wie aus Fig. 5a-c ersichtlich ist, sind zwei Klappen 1 spiegelsymmetrisch angeordnet, wobei die beiden Klappen 1 mittels einer Achse 6 starr miteinander verbunden sind. Dabei ist die Achse 6 in der Schwenkachse 7 der Klappen 1 angeordnet. Jede der Klappen 1 weist einen ersten Bereich 8 auf, der sich in radialer Richtung auf einer Seite der Schwenkachse 7 in Längsrichtung derselben erstreckt, und einen zweiten Bereich 9 auf, der senkrecht hierzu angeordnet ist.

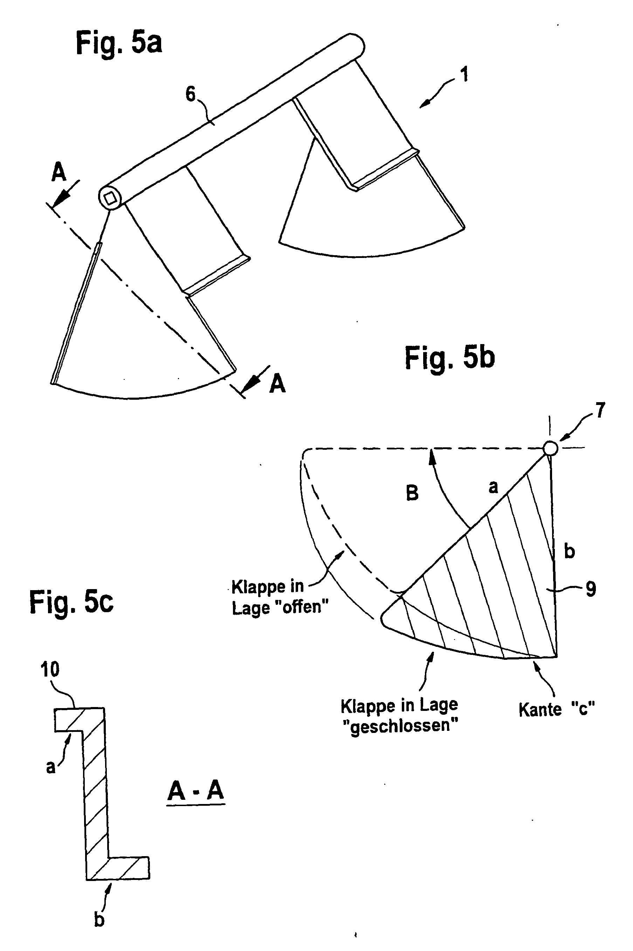

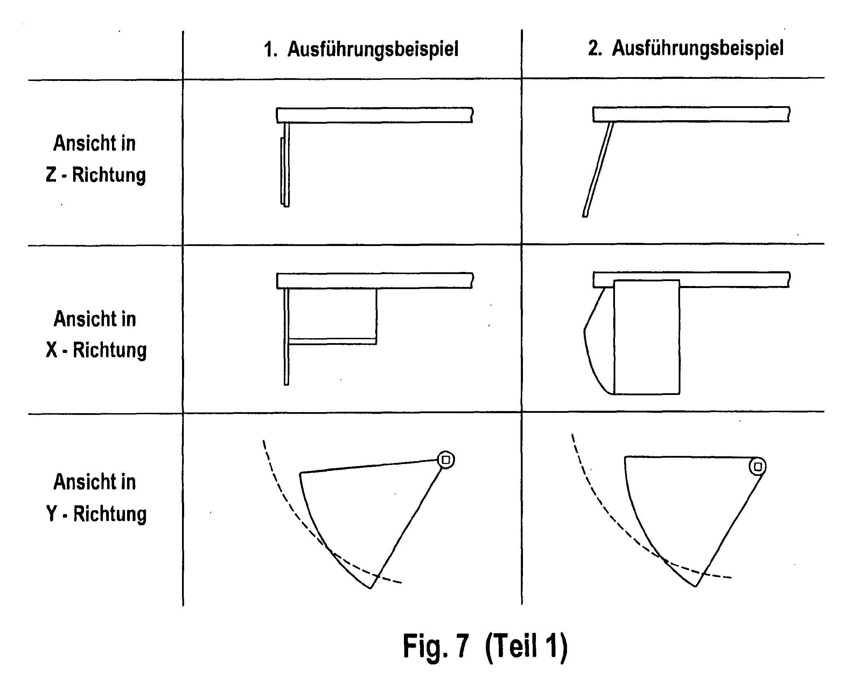

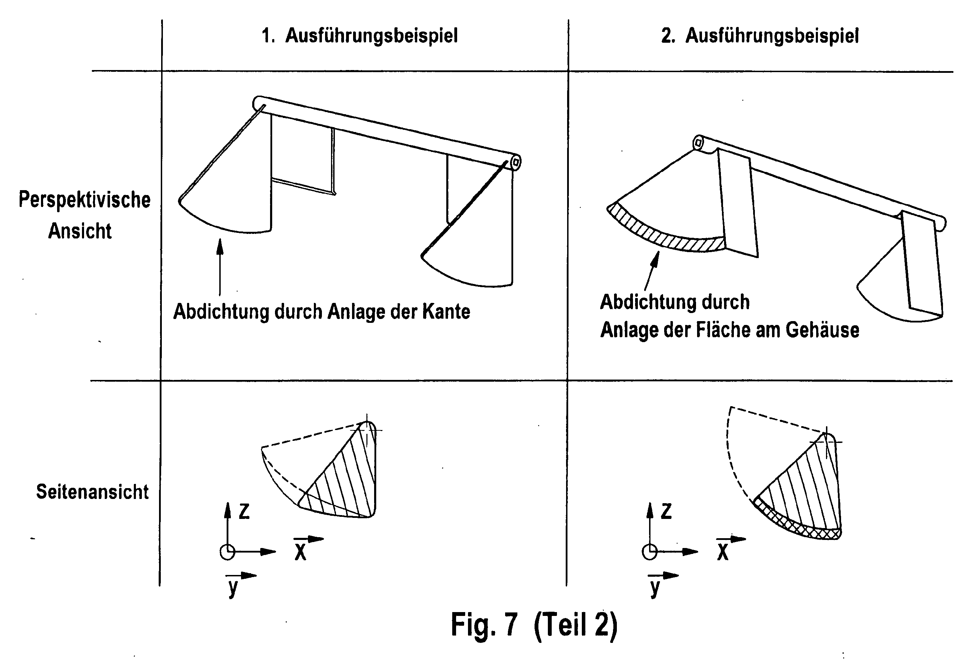

Der erste Bereich 8 weist eine im Wesentlichen rechteckförmige Form auf. Der zweite Bereich 9 weist eine im Wesentlichen kreisausschnittsartige Form auf, wobei jedoch der Mittelpunkt des Kreises bezüglich der Schwenkachse 7 verschoben ist (siehe insbesondere Fig. 5b). Die Klappe 1, d.h. in der entsprechenden Ansicht der zweite Bereich 9, ist in Fig. 5b in ihrer geschlossenen Stellung schraffiert dargestellt, in ihrer offenen Stellung ist lediglich der Umriss des Bereichs 9 gestrichelt dargestellt. Dabei sind in Fig. 5b die beiden Schenkel des Kreisausschnitts mit a und b, der Kreisbogen mit c bezeichnet. Die beiden Schenkel sind in einem Winkel von etwa 45° zueinander angeordnet und jeweils mit einem Rand 10 versehen, wie in Fig. 5c dargestellt. Hierbei erstreckt sich der Rand 10 am Schenkel a nach außen und der Rand 10 am Schenkel b in Richtung des ersten Bereichs 8. Eine derartige Ausgestaltung hat Vorteile in Hinblick auf die Dichtheit, wobei die äußere Kante der Fläche 9 an einer entsprechenden Anlagefläche am Gehäuse anliegt (siehe Fig. 7, Teil 2, perspektivische Ansicht).

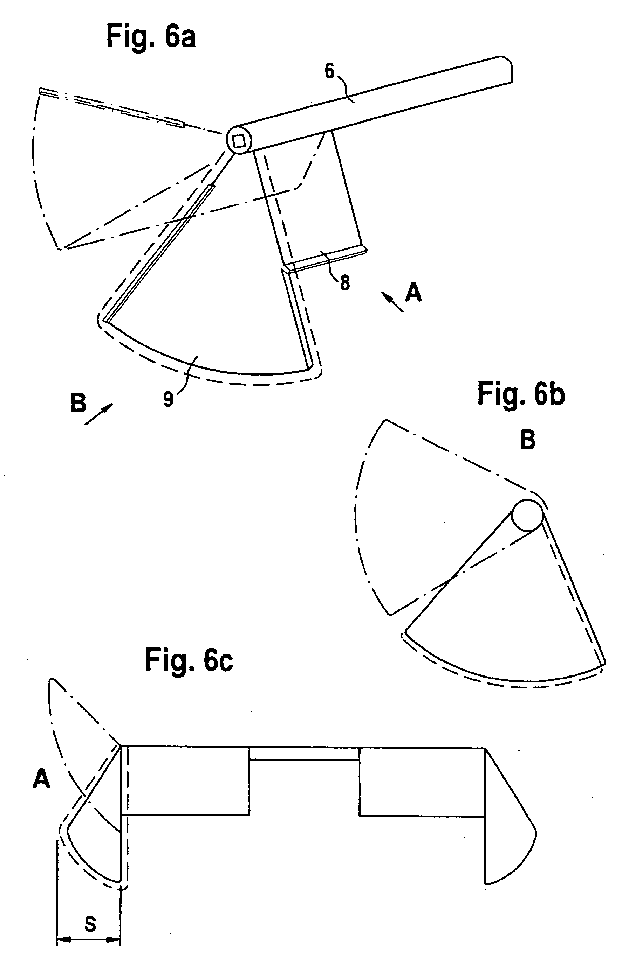

Figuren 6a bis 6c zeigen als zweites Ausführungsbeispiel eine Variante einer Abdichtung der Klappe 1, bei der die Bereiche 9 nicht senkrecht zum Bereich 8, sondern in einem Winkel ungleich 90° angeordnet sind. Hierbei ist in Fig. 6a mit durchgezogener Linie die geschlossene Stellung und mit einer Strich-Punkt-Linie die geöffnete Stellung dargestellt. In der geschlossenen Stellung ist der Umriss des Bereichs 9 gestrichelt und die Öffnung in der Anlagefläche am Gehäuse mit einer durchgezogenen Linie dargestellt.

Auf Grund der schrägen Ausrichtung des Bereichs 9 zum Bereich 8 ergibt sich ein Spalt S zwischen der Klappe 1 und dem Gehäuse, der sich bei Verkleinerung der Öffnung der Klappe 1 verringert. Im geschlossenen Zustand liegt die Klappe 1 mit einem Bereich (siehe Bereich zwischen gestrichelter und durchgezogener Linie in Fig. 6a und Fig. 7, Teil 2, perspektivische Ansicht) am Gehäuse an, so dass eine gute Abdichtung erfolgt. Die beiden Bereiche 9 sind symmetrisch zur Mittelebene, die senkrecht zur Achse 6 verläuft, angeordnet.

### Bezugszeichenliste

- 1: Klappe
- 2: Belüftungssystem
- 3: Klimaanlage
- 4: Defrost-Klappe
- 5: Innenraum-Klappe
- 6: Achse
- 7: Schwenkachse
- 8: erster Bereich
- 9: zweiter Bereich
- 10: Rand

- S: Spalt

## Patentansprüche

1. Klappe-anordung insbesondere für den Fußraum für ein Kraftfahrzeug-Belüftungssystem (2), wobei eine Klappe (1) um eine Schwenkachse (7) verschwenkbar ist, die Klappe (1) einen ersten Bereich (8) aufweist, der sich in radialer Richtung auf einer Seite der Schwenkachse (7) in Längsrichtung derselben erstreckt, und einen zweiten Bereich (9) aufweist, der in einem Winkel hierzu angeordnet ist, **dadurch gekennzeichnet, dass** zwei solche Klappen (1) miteinander über eine starre Achse (6) verbunden sind, wobei die beiden Klappen (1) spiegelsymmetrisch bezüglich der Ebene, die mittig zwischen den beiden Klappen (1) senkrecht zur Achse (6) angeordnet ist, beabstandet ausgebildet sind.

2. Klappe-anordung nach Anspruch 1, **dadurch gekennzeichnet, dass** zumindest ein Teil einer Seite des zweiten Bereichs flächig dicht an einer Anlagefläche im geschlossenen Zustand der Klappe anliegt.

3. Klappe-anordung nach Anspruch 1 oder 2, **dadurch gekennzeichnet, dass** der Winkel 90° beträgt.

4. Klappe-anordung nach einem der vorstehenden Ansprüche, **dadurch gekennzeichnet, dass** der erste Bereich (8) eine rechteckige oder annähernd rechteckige Form aufweist.

5. Klappe-anordung nach einem der vorstehenden Ansprüche, **dadurch gekennzeichnet, dass** der zweite Bereich (9) sich in einer Ebene senkrecht zur Schwenkachse (7) erstreckt.

6. Klappe-anordung nach Anspruch 5, **dadurch gekennzeichnet, dass** der zweite Bereich (9) eine kreisausschnittsartige Form aufweist.

7. Klappe-anordung nach Anspruch 6, **dadurch gekennzeichnet, dass** der zweite kreisausschnittsartige Bereich (9) einen Winkel von zwischen 15° und 90°, insbesondere 45°, aufweist.

8. Klappe-anordung nach Anspruch 6 oder 7, **dadurch gekennzeichnet, dass** der zweite kreisausschnittsartige Bereich (9) unterschiedlich lange Schenkel (a, b) aufweist.

9. Klappe-anordung nach Anspruch 1, **dadurch gekennzeichnet, dass** die beiden ersten Bereiche (8) näher aneinander angeordnet sind als die zweiten Bereiche (9).

10. Klappe-anordung nach einem der vorhergehenden Ansprüche, **dadurch gekennzeichnet, dass** der eine Bereich (8 oder 9) für die Beaufschlagung des Fußbereichs eines oder beider Front-Sitze und der andere Bereich (9 oder 8) für die Beaufschlagung des Fußbereichs eines oder beider Fond-Sitze dient.

11. Klappe-anordung nach Anspruch 10, **dadurch gekennzeichnet, dass** der erste Bereich (8) zur Beaufschlagung des Fußbereichs des Fond-Bereichs und der zweite Bereich (9) zur Beaufschlagung des Fußbereichs des Front-Bereichs dient.

12. Kraftfahrzeug-Belüftungssystem, insbesondere für ein Kraftfahrzeug, **gekennzeichnet durch** eine Klappe-anordung (1) nach einem der Ansprüche 1 bis 11.

## Claims

1. A flap arrangement, in particular for the lower part of a passenger compartment for a motor vehicle ventilation system (2), it being possible to pivot a flap (1) about an axis of pivoting (7), said flap (1) having a first area (8) which extends radially on one side of the axis of pivoting (7) and longitudinally in relation thereto, and having a second area (9) which is positioned at an angle hereto
**characterised in that**
two such flaps (1) are connected together by means of a rigid axis (6), both flaps (1) being positioned a certain distance apart and mirror symmetrically in relation to the plane located centrally between the two flaps (1) perpendicular to the axis (6).

2. A flap arrangement in accordance with claim 1,
**characterised in that**
at least one part of a side of the second area lies flush against a stopping surface when the flap is closed.

3. A flap arrangement in accordance with claim 1 or 2,
**characterised in that**
the angle is 90°.

4. A flap arrangement in accordance with one of the preceding claims,
**characterised in that**
the first area (8) is rectangular or approximately rectangular in shape.

5. A flap arrangement in accordance with one of the preceding claims,
**characterised in that**
the second area (9) extends in a plane perpendicular to the axis of pivoting (7).

6. A flap arrangement in accordance with claim 5,
**characterised in that**
the second area (9) is shaped like the sector of a circle.

7. A flap arrangement in accordance with claim 6,
**characterised in that**
the second area (9), which is shaped like the sector of a circle, has an angle of between 15° and 90°, in particular 45°.

8. A flap arrangement in accordance with claim 6 or 7,
**characterised in that**
the second area (9), which is shaped like a sector of a circle, has legs (a, b) of different lengths.

9. A flap arrangement in accordance with claim 1,
**characterised** i n that
the two first areas (8) are positioned closer to one another than the second areas (9).

10. A flap arrangement in accordance with one of the preceding claims,
**characterised in that**
**that** one area (8 or 9) serves to supply the lower area of the passenger compartment of one or both front seats while the other area (9 or 8) serves the lower area of the passenger compartment of one or both rear seats.

11. A flap arrangement in accordance with claim 10,
**characterised in that**
the first area (8) serves to supply the lower area of the passenger compartment in the rear area while the second area (9) serves to supply the lower area of the passenger compartment in the front area.

12. A motor vehicle ventilation system, in particular for a motor vehicle,
**characterised by**
a flap arrangement (1) in accordance with one of claims 1 to 11.

## Revendications

1. Dispositif de clapet, en particulier pour un plancher d'un système d'aération (2) d'un véhicule automobile, dans lequel un clapet (1) peut pivoter autour d'un axe de pivotement (7), le clapet (1) présentant une première zone (8) qui s'étend dans la direction radiale sur un côté de l'axe de pivotement (7) dans le sens longitudinal de celui-ci, et une deuxième zone (9) qui forme un angle avec celui-ci, **caractérisé en ce que** deux tels clapets (1) sont reliés entre eux par un axe (6) rigide, les deux clapets, disposés en symétrie miroir par rapport au plan, disposé au centre entre les deux clapets (1) perpendiculairement à l'axe (6), étant distants l'un de l'autre.

2. Dispositif de clapet selon la revendication 1, **caractérisé en ce qu'**au moins une partie d'un côté de la deuxième zone plaque sur toute la surface de manière étanche contre une surface de butée lorsque le clapet est fermé.

3. Dispositif de clapet selon la revendication 1 ou 2, **caractérisé en ce que** l'angle mesure 90°.

4. Dispositif de clapet selon l'une quelconque des revendications précédentes, **caractérisé en ce que** la première zone (8) a une forme rectangulaire ou approximativement rectangulaire.

5. Dispositif de clapet selon l'une quelconque des revendications précédentes, **caractérisé en ce que** la deuxième zone (9) s'étend sur un plan perpendiculairement à l'axe de pivotement (7).

6. Dispositif de clapet selon la revendication 5, **caractérisé en ce que** la deuxième zone (9) a une forme en arc de cercle.

7. Dispositif de clapet selon la revendication 6, **caractérisé en ce que** la deuxième zone (9) en forme d'arc de cercle présente un angle compris entre 15 et 90°, en particulier 45°.

8. Dispositif de clapet selon la revendication 6 ou 7, **caractérisé en ce que** la deuxième zone (9) en forme d'arc de cercle a des bras (a, b) de longueur différente.

9. Dispositif de clapet selon la revendication 1, **caractérisé en ce que** les deux premières zones (8) sont disposées plus près l'une de l'autre que les deuxièmes zones (9).

10. Dispositif de clapet selon l'une quelconque des revendications précédentes, **caractérisé en ce que** l'une des zones (8 ou 9) sert à l'alimentation de la zone de pied d'un ou des deux sièges avant et l'autre zone (9 ou 8) à l'alimentation de la zone de pied de l'un ou des deux sièges avant.

11. Dispositif de clapet selon la revendication 10, **caractérisé en ce que** la première zone (8) sert à l'alimentation de la zone de pied de la zone arrière et la deuxième zone (9) à l'alimentation de la zone de pied de la zone avant.

12. Système d'aération d'un véhicule automobile, en particulier d'un véhicule automobile, **caractérisé par** un dispositif de clapet (1) selon l'une quelconque des revendications 1 à 11.
